Europäisches Patentamt

European Patent Office

Office européen des brevets

(19)

(11) EP 0 675 357 B1

(12) FASCICULE DE BREVET EUROPEEN

(45) Date de publication et mention
de la délivrance du brevet:
**16.09.1998 Bulletin 1998/38**

(51) Int Cl.$^6$: **G01N 33/00**, G01N 27/16

(21) Numéro de dépôt: **95400645.8**

(22) Date de dépôt: **23.03.1995**

(54) **Procédé de caractérisation d'un mélange gazeux par oxydation catalytique**

Verfahren zur Charakterisierung einer Gasmischung durch katalytische Oxidation

Method for characterising a gaseous mixture by catalytic oxidation

(84) Etats contractants désignés:
**BE DE FR GB IT NL**

(30) Priorité: **31.03.1994 FR 9403825**

(43) Date de publication de la demande:
**04.10.1995 Bulletin 1995/40**

(73) Titulaire: **L'INSTITUT NATIONAL DE
L'ENVIRONNEMENT INDUSTRIEL ET DES
RISQUES
F-60550 VERNEUIL-EN-HALATTE (FR)**

(72) Inventeurs:
• **Zdanevitch, Isabelle
F-75018 Paris (FR)**
• **Rose, Gérard
F-60470 Villers-Saint-Paul (FR)**

(74) Mandataire: **Rinuy, Santarelli
14, avenue de la Grande Armée
75017 Paris (FR)**

(56) Documents cités:
EP-A- 0 234 251          EP-A- 0 444 753
EP-A- 0 458 058          WO-A-90/12313

## Description

L'invention concerne un procédé de caractérisation par oxydation catalytique d'un mélange gazeux d'air et d'au moins un gaz ou une vapeur combustible.

Elle vise un procédé permettant notamment :

- de mesurer le titre volumique d'un mélange air-gaz combustible, avec la précision requise par les normes métrologiques qui s'appliquent aux appareils de détection et de mesure des gaz combustibles,
- d'effectuer le lever de doute pour certains mélanges, et/ou
- d'identifier un gaz.

Parmi les applications visées du procédé, citons les dispositifs suivants :

- méthanomètre faisant le lever de doute et conforme à la norme métrologique européenne EN 50 055,
- explosimètre conforme à la norme métrologique européenne EN 50 057,
- appareil multigaz conforme aux normes métrologiques européennes EN 50 055 et EN 50 057, et donnant l'identité du gaz titré,
- méthanomètre sélectif.

Les paramètres d'influence agissant sur un transducteur catalytique sont les paramètres perturbateurs pour lesquels le transducteur catalytique est sensible et fournit une réponse qui s'additionne algébriquement à la réponse due au gaz et qui induit une erreur dans la détermination du titre volumique. Les deux principaux paramètres d'influence sont la conductivité thermique et la température du mélange gazeux qui déterminent les pertes de chaleur du transducteur dans le mélange.

Les capteurs catalytiques comportent toujours, actuellement, deux éléments : un détecteur (le transducteur catalytique) et un compensateur.

Le détecteur est porté à une température suffisante pour oxyder tous les gaz. La chaleur dégagée par la réaction d'oxydation du gaz sur le détecteur est mesurée par une technique quelconque. Par exemple : mesure de l'augmentation de la résistance électrique du transducteur (qui est fonction de sa température) - ou mesure de la diminution du courant de chauffage dans le cas où l'on a opté pour un fonctionnement du transducteur à température constante.

Le détecteur fournit donc une réponse à une variation de chaleur : variation due à l'oxydation du gaz - variation due à une modification des pertes dans le mélange - ou encore, variation due à l'augmentation de la température normale de fonctionnement pour un régime électrique donné, ce qui peut se produire à long terme si le transducteur est un filament qui s'use.

Le signal de réponse du détecteur $S_d$ est la somme algébrique de plusieurs signaux : signal $S_T$ induit par la température de fonctionnement - signal $S_p$ induit par les pertes dans le mélange - signal $S_g$ induit par l'oxydation d'un gaz : $S_d = S_T + S_p + S_g$.

Comme son nom l'indique, un élément compensateur a pour fonction de compenser les influences de ces paramètres perturbateurs sur la réponse du détecteur. Sa géométrie et sa constitution sont identiques à celles du détecteur si bien qu'il a le même coefficient de température et le même coefficient d'usure. Mais il a reçu un traitement de surface qui empêche la réaction d'oxydation de se produire. Il est chauffé à la même température que le détecteur.

Son signal de réponse $S_c$ est donc : $S_c = S_T + S_p$.

En soustrayant le signal compensateur du signal détecteur, on recueille le signal gaz. La soustraction s'effectue par un circuit électrique quelconque : pont de Wheatstone, amplificateur différentiel, etc ...

$$S_d - S_c = S_g.$$

De manière générale, le signal de réponse traduit la valeur instantanée d'une grandeur caractéristique du régime thermique du transducteur ou détecteur catalytique.

Par principe, la réponse d'un transducteur catalytique n'est pas biunivoque. Elle croît jusqu'à la concentration stoechiométrique du gaz dans le milieu (pour laquelle la quantité d'oxygène dans le mélange est juste ce qu'il faut pour oxyder tout le gaz), puis décroît par manque d'oxygène pour s'annuler dans 100 % gaz. La réponse est donc ambivalente, et il existe sur le titrage mesuré un doute qu'il convient de lever (d'où l'expression de lever de doute).

Les appareils de mesure actuels ne savent pas lever le doute, mais ils verrouillent la lecture et l'alarme quand la concentration dépasse un seuil fixé en-dessous de la stoéchiométrie (c'est-à-dire qu'ils maintiennent la lecture à la valeur de ce seuil et maintiennent l'alarme même si la réponse du transducteur redescend en-dessous de ce seuil). Il appartient à l'utilisateur, avant de déverrouiller, de mesurer le titre avec un autre appareil, d'un autre type (catharomètre

EP 0 675 357 B1

par exemple, qui détermine le titre volumique à partir de la mesure de la conductivité du mélange) ou au moins avec un autre détecteur fonctionnant dans un régime différent.

A notre connaissance, l'identification d'un gaz dans l'air, qui permettrait entre autre d'universaliser la réponse d'un explosimètre, n'a encore jamais été mise en oeuvre dans ce type d'appareil.

Ainsi le document WO-A-90-12313 propose, pour la détermination de la concentration en un gaz donné, une alimentation pseudo-continue d'un filament catalytique, unique, en vue d'une consommation électrique réduite ; il est envisagé de se servir du temps de mise en équilibre pour caractériser le gaz concerné. Rien n'est prévu pour le lever de doute. Le document EP-0.234.251 prévoit, pour la mesure de la concentration en un gaz donné avec un filament unique, deux modes alternatifs de mesure utilisant chacun une température spécifique : on procède soit par mesure de conductibilité thermique à température basse si la concentration est élevée, soit par mesure catalytique à température élevée si cette concentration est faible. Enfin, le document EP-0.458.058 utilise la combinaison d'un filament détecteur et d'un filament compensateur. En fait ces documents ne permettent pas, à la fois, une mesure précise (en comprenant les éventuels phénomènes parasites) avec un seul filament, avec lever de doute et possibilité d'identifier le gaz en question.

L'invention visée a pour objet de pallier les inconvénients précités et a pour objet un procédé de caractérisation d'un milieu gazeux composé pour majorité d'air, et pour une moindre part d'au moins un gaz oxydable, qui ne fasse intervenir qu'un transducteur catalytique sans élément compensateur, qui permette de déterminer la concentration (titre) volumique du milieu en au moins un gaz oxydable prédéterminé, qui puisse permettre en outre, toujours avec un seul transducteur, le lever de doute dans le cas de certains gaz (méthane notamment) ainsi que, toujours avec le seul transducteur catalytique, une détermination simultanée ou non de la concentration du milieu en plusieurs gaz oxydables prédéterminés (avec donc au moins la possibilité d'identifier celui (supposé seul) qui, parmi plusieurs gaz possibles prédéterminés, est présent dans le milieu en complément de l'air), ce procédé étant simple et fiable du point de vue mise en oeuvre, et conduisant à un temps de réponse modéré (typiquement de l'ordre de quelques secondes au plus).

Elle propose à cet effet un procédé pour la caractérisation en au moins un premier gaz oxydable prédéterminé d'un milieu gazeux à base d'air selon lequel,

- on place un transducteur unique catalytique dans ce milieu gazeux,
- on amène en un premier temps ce transducteur catalytique à une température de seuil inférieur pour laquelle ce gaz oxydable ne s'oxyde peu ou pas, et on saisit une première valeur d'une grandeur caractéristique du régime thermique du transducteur,
- on amène en un deuxième temps ce transducteur catalytique à une température de seuil supérieur pour laquelle ce gaz oxydable s'oxyde de façon significative au contact de ce transducteur catalytique, et on saisit une seconde valeur de ladite grandeur caractéristique du régime thermique du transducteur,
- on élabore selon une loi prédéterminée un signal de réponse représentatif du milieu gazeux à partir de la différence entre les seconde et première valeurs de la grandeur caractéristique du régime thermique du transducteur catalytique,
- on laisse refroidir le transducteur catalytique en dessous de la température de seuil inférieur et on répète cycliquement les opérations précédentes.

La principale caractéristique innovante du procédé est qu'il réalise toutes ces performances à partir de la réponse d'un seul transducteur catalytique, sans utiliser aucun autre transducteur ou élément de compensation pour compenser les paramètres d'influence.

Le procédé défini ci-dessus consiste donc à mesurer la réponse du transducteur pour différentes températures de fonctionnement croissantes, pendant une phase de chauffage de courte durée, puis, à partir de ces réponses, et selon l'application, à calculer le titre volumique, faire le lever de doute, et/ou identifier le (voire les) gaz. La durée de la phase d'extinction entre les cycles de chauffage est choisie en fonction de la durée de réponse souhaitée pour l'application. Le nombre de paliers de température, qui détermine la durée de la phase de chauffage, dépend aussi de l'application : deux paliers pour un méthanomètre, jusqu'à cinq paliers (voire plus) pour les deux autres applications indiquées ci-dessus.

Le procédé peut s'appliquer à tous les types de transducteurs catalytiques, mais il présente tout particulièrement un intérêt pratique (lorsque l'on veut une réponse rapide) pour ceux dont l'inertie thermique est suffisamment faible pour permettre une durée de chauffage courte. A ce titre, il convient très bien aux transducteurs du type filament : filament de platine pur ou certains filaments recouverts d'un matériau catalyseur.

Selon des caractéristiques préférées de l'invention, éventuellement combinées :

- le transducteur catalytique comporte un élément résistif et on amène ce transducteur catalytique aux températures de seuil inférieur puis de seuil supérieur par application d'un courant électrique à cet élément résistif,

- on choisit la température de seuil inférieur proche de la température à partir de laquelle ledit gaz oxydable commence à s'oxyder,
- le tranducteur catalytique étant un filament de platine, on choisit les températures de seuils supérieur et inférieur telles que leur différence soit au moins égale à 50°C environ et au plus égale à 300°C environ, de préférence au plus égale à 200°C environ,
- le gaz oxydable prédéterminé étant le méthane, le signal de réponse est soit un signal dépendant de la différence entre les seconde et première valeurs de la grandeur caractéristique si leur différence est positive, soit un signal de saturation prédéterminé si cette différence est négative,
- les températures de seuil sont 800°C et 1000°C environ lorsque le transducteur catalytique est un filament de platine et lorsque le gaz oxydable considéré est soit du méthane, soit de l'éthylène,
- les températures de seuil sont 300°C et 600°C environ lorsque le transducteur catalytique est un filament de platine et lorsque le gaz oxydable considéré est soit du propane, soit du butane, soit de l'alcool éthylique,
- les températures de seuil sont 100°C et 200°C environ lorsque le transducteur catalytique est un filament de platine et lorsque le gaz oxydable considéré est de l'hydrogène,
- pour la caractérisation dudit milieu gazeux à base d'air en au moins un second gaz oxydable ayant une température de début d'oxydation sensiblement différente de celle du premier gaz, on choisit pour ce deuxième gaz oxydable une température de seuil inférieur pour laquelle ce deuxième gaz oxydable s'oxyde peu ou pas et une température de seuil supérieur à laquelle ce deuxième gaz s'oxyde de façon significative, ces températures de seuil définissant un intervalle de température sensiblement disjoint de, mais éventuellement adjacent à, l'intervalle des températures de seuil choisies pour le premier gaz, et on amène successivement le transducteur catalytique à ces diverses valeurs de seuil, classées par ordre croissant, on saisit la valeur instantanée de ladite grandeur caractéristique du régime thermique du transducteur pour chacune de ces températures de seuil, et on élabore selon une procédure prédéterminée un signal de réponse global à partir des différences constatées entre les valeurs saisies pour les températures de seuil de chacun des gaz,
- lesdits intervalles de température sont adjacents,
- pour la caractérisation du milieu gazeux en hydrogène, et/ou en un gaz choisi parmi l'alcool éthylique, le butane et le propane, et/ou en un gaz choisi parmi le méthane et l'éthylène, on amène successivement le transducteur catalytique à environ 100°C, 200°C, 300°C, 600°C, 800°C et 1000°C, et on élabore le signal de réponse global à partir de la plus grande différence, à une constante caractéristique près, des valeurs saisies pour chacun des intervalles entre lesdites températures précitées,
- pour la caractérisation sélective du méthane parmi d'autres gaz oxydables dans ledit milieu gazeux, on amène successivement le transducteur catalytique à environ 100°C, 200°C, 300°C, 600°C, 800°C et 1000°C, et on élabore le signal de réponse global à partir de la différence à une constante caractéristique près des valeurs obtenues pour 1000°C et 800°C respectivement si celle-ci est significativement négative, ou est supérieure aux différences obtenues, à des constantes caractéristiques près, pour les autres intervalles de température.

Dans tout ce qui précède, lorsque le transducteur catalytique est un filament de platine, les températures considérées sont en pratique les températures centrales, calculées d'après des mesures effectuées par exemple, par pyrométrie optique.

Des objets, caractéristiques et avantages de l'invention ressortent de la description qui suit, donnée à titre d'exemple non limitatif ; en regard des dessins annexés sur lesquels :

- la figure 1 est un graphique corrélant, pour un même titre volumique (par exemple 1%), la réponse d'un transducteur catalytique donné pour six gaz oxydables différents,
- la figure 2 est un graphique corrélant, pour les températures de 800°C et 1000°C, les réponses du transducteur catalytique pour une teneur volumique en méthane variant entre 0 et 100 %,
- la figure 3 est le schéma électronique simplifié d'un dispositif adapté à la mise en oeuvre du procédé,
- la figure 4 est un chronogramme représentant un régime de température appliqué au transducteur avec deux paliers, pour la mesure du méthane par exemple, et
- la figure 5 est un chronogramme représentant un régime de température appliqué au transducteur avec cinq paliers pour une application en explosimètre par exemple.

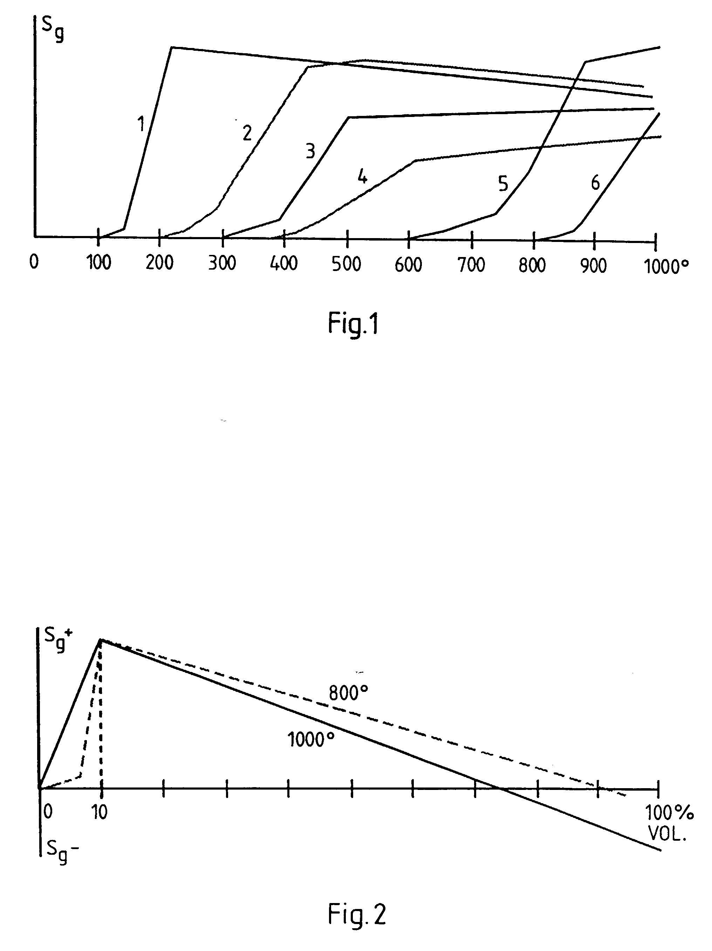

La figure 1 montre la réponse d'un filament de platine pour divers gaz oxydables, en fonction de sa température de fonctionnement.

Lorsque le gaz est du méthane (courbe N° 6) et le filament un fil de platine pur, spiralé et ayant un diamètre de 80 µm, l'ordre de grandeur du signal de réponse du filament au gaz, à 1000°, est de 20 mV/%.

En-dessous de 800°, la quantité de méthane s'oxydant sur le filament n'est pas suffisante pour qu'il donne une réponse utilisable. Elle ne devient effective qu'au-dessus de cette température et croît avec elle.

Sur la figure 1, les gaz considérés sont les suivants :

gaz 1 : hydrogène
gaz 2 : alcool éthylique
gaz 3 : butane
gaz 4 : propane
gaz 5 : éthylène
gaz 6 : méthane

mais il doit bien être compris qu'il ne s'agit là que d'une liste indicative et ce qui suit vaut pour bien d'autres gaz oxydables.

Le principe du procédé repose sur la forme de ces caractéristiques de réponse et sur leurs décalages en température.

Le titrage d'un mélange gazeux à base d'air dans lequel seul un gaz oxydable donné est susceptible d'être présent nécessite trois étapes :

- à l'instant t1, le filament est porté à la température de seuil inférieur T1 (choisie à un niveau pour lequel le gaz donné s'oxyde peu ou pas - elle est de préférence choisie proche de la température pour laquelle ce gaz commence à s'oxyder) et donne un signal de réponse S1 qui est fonction : de T1 - des pertes thermiques dans le mélange - de la quantité de gaz oxydé,

$$S1 = S_T1 + S_p1 + S_g1$$

- à l'instant t2, le filament est porté à la température de seuil supérieur T2 (supérieure à T1) et donne un signal de réponse S2 :

$$S2 = S_T2 + S_p2 + S_g2$$

- à l'instant t3, le chauffage du filament est coupé. La détermination de la teneur du gaz à partir des mesures S1 et S2 peut se faire notamment de deux manières, selon les hypothèses que l'on accepte de faire.

Selon une méthode simplifiée, on suppose que les termes $S_p2$ et $S_p1$ sont pratiquement égaux (lorsque les deux températures de fonctionnement sont suffisamment proches l'une de l'autre, avec un écart par exemple de l'ordre de 100°C à 200°C).

Selon cette méthode simplifiée, on utilise la différence :

$$d1 = S2 - S1 - Ct1$$

où Ct représente le terme $S_T2 - S_T1$. Le terme est calculé et mis en mémoire par l'instrument quand on procède au réglage de son zéro dans de l'air propre (ne contenant pas de gaz combustibles). A noter que $S_T2 - S_T1$ reste constant même quand le filament s'use : l'usure, qui augmente la résistance du filament, fait dériver $S_T2$ et $S_T1$ dans le même sens positif selon des amplitudes suffisamment voisines pour que l'erreur résultante reste dans les tolérances métrologiques.

En conséquence :

$$S2 - S1 - Ct = S_g2 - S_g1$$

ce qui donne, s'il n'y a pas d'oxydation du gaz à T1 :

$$d1 = S_g2$$

Selon une autre méthode plus précise, mais faisant intervenir un plus grand nombre de paramètres à déterminer préalablement de façon expérimentale, on peut prendre en compte, pour tenir compte de ce que les termes $S_p2$ et

$S_p1$ ne sont pas réellement égaux, les grandeurs suivantes :

$$\Delta S2 = S2 - S2_0$$

$$\Delta S1 = S1 - S1_0$$

où $S1_0$ et $S2_0$ sont les mesures obtenues aux températures T1 et T2 dans de l'air propre (elles doivent en pratique être régulièrement remesurées lorsque le transducteur est un filament susceptible de s'user).

On a donc, en tenant compte des termes constitutifs de S1 ou S2, ou $S1_0$ ou $S2_0$ :

$$(S_p2 - S_p2_0) + (S_T2 - S_T2_0) + (S_g2 - S_g2_0)$$

ce qui, en tenant compte de ce que le deuxième terme est nul et de ce que par définition $S_g2_0$ est nul donne :

$$\Delta S2 = (S_p2 - S_p2_0) + S_g2 = \Delta S_p2 + S_g2$$

où le symbole $\Delta$ désigne une différence.

On a de même :

$$\Delta S1 = \Delta S_p1 + S_g1$$

Soit le coefficient K1 tel que :

$$\Delta S_p2 = K1.\Delta S_p1$$

dont on peut admettre qu'il soit constant pour un couple T1, T2 donné quelle que soit la teneur, supposée faible, en gaz combustible ; on peut donc aisément le déterminer à l'avance.

On définit alors le terme :

$$d'1 = \Delta S2 - K1.\Delta S1$$

ce qui peut également s'écrire :

$$d'1 = S_g2 - K1.S_g1$$

Cette expression est un peu plus complexe que l'expression donnée ci-dessus pour d1.

Toutefois, on peut noter que d'1 prend la même signification physique que d1 lorsque T1 est choisie à un niveau tel que le gaz ne s'oxyde pas, c'est-à-dire que l'on a :

$$d'1 = S_g2$$

Le choix de T1 et T2 et l'écart entre elles déterminent la sensibilité du capteur et sa stabilité dans le temps (qui se trouve améliorée par le procédé). La sensibilité est l'amplitude du signal de réponses par % volumique de gaz oxydable. La stabilité est le maintien de cette performance dans le temps. On peut noter que si T2 - T1 diminue, la sensiblité diminue mais la stabilité augmente.

Comme la réponse d'un détecteur catalytique en fonction de sa température de fonctionnement est différente selon les gaz, on ne peut calculer un titrage volumique d'un milieu gazeux contenant plusieurs gaz (ayant des courbes bien décalées en température) à partir des signaux de réponse, à seulement deux températures. Ainsi par exemple, comme le montre la figure 1, il est impossible de titrer les gaz 1, 2, 3 et 4 à partir des températures nécessaires (en pratique 900°C et 1000°C) pour titrer les gaz 5 et 6.

Pour une caractérisation (identification d'un gaz parmi plusieurs gaz connus susceptibles d'apparaître dans le milieu gazeux (explosimètre)), il convient d'effectuer plusieurs paliers de température par ordre croissant et d'associer un couple de valeurs de températures de seuil pour le titrage d'un gaz ou d'un ensemble de gaz pour lesquels le capteur peut fournir une réponse spécifique :

100°C et 200°C pour le gaz 1
300°C et 600°C pour le gaz 2 ou 3 ou 4
800°C et 1000°C pour le gaz 5 ou 6.

Le déroulement du procédé est alors le suivant :

- à l'instant t1, le détecteur est porté à la température de fonctionnement T1 pour laquelle aucun des gaz n'est susceptible de s'oxyder sensiblement ; le signal de réponse S1 du détecteur est mesuré et mis en mémoire,
- à t2, le détecteur est porté à T2 pour laquelle seul l'un des gaz est susceptible de s'oxyder ; le signal de réponse S2 du détecteur est mesuré et mis en mémoire,
- à t3, le détecteur est porté à T3 pour laquelle seul un gaz supplémentaire est susceptible de s'oxyder ; le signal de réponse S3 du détecteur est mesuré et mis en mémoire,
- à tn, le détecteur est porté à Tn ; le signal de réponse Sn du détecteur est mesuré et mis en mémoire,
- à t(n+1), le chauffage du détecteur est coupé.

On procède ensuite selon la méthode choisie ; si l'on opte pour la méthode simplifiée, on effectue les différences suivantes :

$$d(n-1) = Sn - S(n-1) - Ct(n-1)$$

$$.....$$

$$d3 = S4 - S3 - Ct3$$

$$d2 = S3 - S2 - Ct2$$

$$d1 = S2 - S1 - Ct1$$

Le résultat le plus grand donne le titre volumique, à un coefficient de sensibilité près (que l'on peut déterminer par étalonnage) ; les constantes Ct(n-1) à Ct1 sont préalablement déterminées et mises en mémoire par l'instrument lors du réglage de son zéro dans de l'air propre.

On peut noter que l'on considère ici des intervalles adjacents c'est-à-dire que la température de seuil supérieur d'un intervalle est la température de seuil inférieur de l'intervalle immédiatement supérieur. En variante les intervalles pour lesquels on s'intéresse à la différence d peuvent être disjoints.

Compte tenu de ce que la courbe caractéristique des gaz varie faiblement et de façon continue (de façon connue) au-delà de leur maximum, on comprend que ce qui précède peut se généraliser à l'identification et le titrage simultanés de plusieurs gaz dans l'air, surtout si les créneaux de température contenant les segments fortement ascendants des courbes de ces gaz éventuels sont sensiblement disjoints.

Le lever de doute est réalisable avec un gaz tel que le méthane ayant une conductivité thermique supérieure à celle de l'air.

La figure 2 montre la réponse du filament de platine lors d'une expérimentation à différentes teneurs en méthane, à 800° (trait pointillés) et 1000° (trait plein) de température de fonctionnement.

Au-delà de la teneur stoechiométrique (vers 10 %), la réponse du filament résulte de deux paramètres antagonistes : l'oxydation du gaz, qui apporte de la chaleur mais qui diminue lorsque la teneur en méthane augmente, et la conductivité du mélange qui augmente avec cette teneur mais qui enlève de la chaleur. Or, les quantités de gaz oxydées aux deux températures sont pratiquement identiques au-dessus de la teneur stoechiométrique, alors que la conductivité thermique provoque des pertes de chaleur plus importantes à 1000° qu'à 800°. Ceci explique que le signal de réponse à 800° soit supérieur à celui à 1000° pour les fortes concentrations.

$S_g = S_{(1000°)} - S_{(800°)}$ devient donc négatif pour les concentrations supérieures à la stoechiométrie. Il n'y a donc plus de doute possible sur la mesure du titre.

Dans un méthanomètre, qui donne normalement le titre jusqu'à 5% vol, un signal fortement négatif (pour ne pas confondre avec un léger déréglage) traduira donc une teneur au-delà de la stoechiométrie et sera converti en un signal de réponse faisant apparaître que le titre est supérieur à cette pleine échelle.

Lorsque les gaz considérés par l'application sont connus et ont des courbes de réponse très distinctes (en température) les unes des autres, il est possible de donner le nom du gaz dont on a mesuré le titre volumique par la technique multipalier précitée.

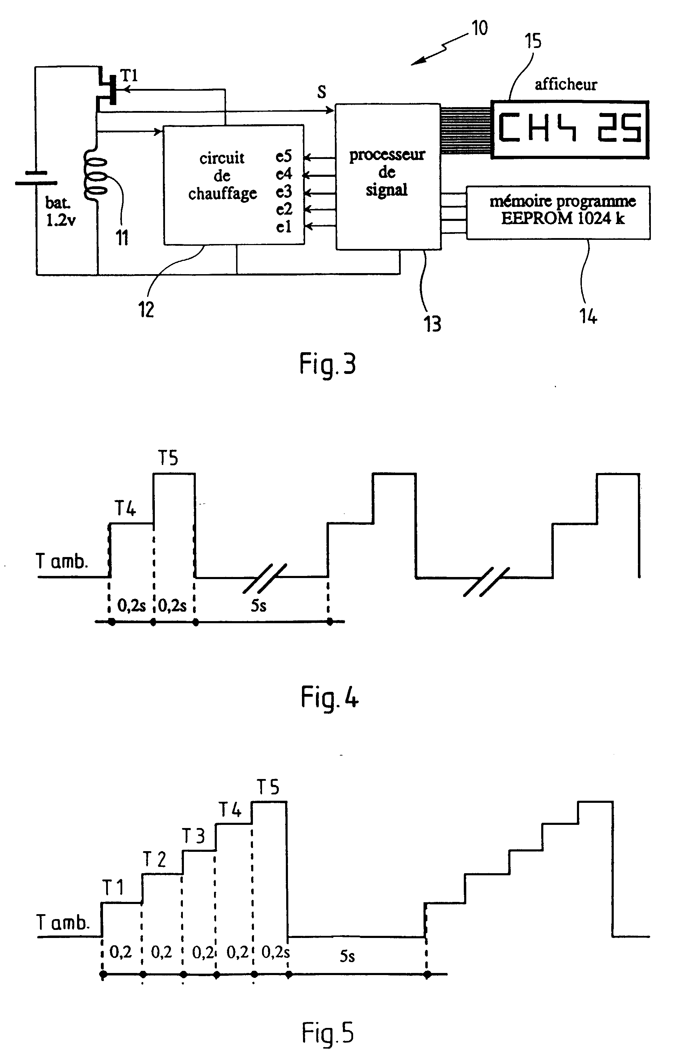

La figure 3 donne le circuit électronique d'un dispositif 10 utilisé pour les trois applications qui sont indiquées ci-dessous (seul le programme diffère).

Le transducteur utilisé est un filament 11 de platine pur de $\phi$ 80 $\mu$m, avec 11 spires formant une spirale telle que : $\phi = 0,2$ mm ; L = 2 mm.

Un circuit de chauffage 12 actionne une vanne de courant T1 pour ne laisser passer dans le filament que le courant de chauffage nécessaire pour le maintenir à une température de fonctionnement constante, choisie par des états logiques appliqués à ses entrées e1, e2, e3, e4, e5, par exemple selon la correspondance suivante :

| e5 | e4 | e3 | e2 | e1 | Température de chauffage |
|----|----|----|----|----|--------------------------|
| 0  | 0  | 0  | 0  | 0  | arrêt |
| 0  | 0  | 0  | 0  | 1  | T1 |
| 0  | 0  | 0  | 1  | 1  | T2 |
| 0  | 0  | 1  | 1  | 1  | T3 |
| 0  | 1  | 1  | 1  | 1  | T4 |
| 1  | 1  | 1  | 1  | 1  | T5 |

Le prototype d'instrument considéré ici a, non pas les 6 seuils de température mentionnés ci-dessus, mais les 5 seuils de température suivants :

. T1 = 100°C
. T2 = 200°C
. T3 = 500°C
. T4 = 800°C
. T5 = 1000°C.

Un processeur de signal 13 (par exemple TSS400S de TEXAS INSTRUMENT) gère les étapes du procédé :

. il commande les différents paliers de chauffage et effectue le cadencement,
. il mesure les signaux de réponse du filament ici constitués par les d.d.p à ses bornes,
. il effectue les calculs,
. il donne les résultats sous la forme requise par l'application % vol ou % L.I.E. (limite inférieure d'explosivité) le plus souvent.

Le programme et les diverses constantes sont rangés dans un circuit de mémoire 14 du type E.E. PROM.

Les résultats sont ici affichés, à l'aide d'un élément de visualisation 15.

La figure 4 montre le régime de température que l'on cherche à faire suivre au transducteur catalytique lorsque l'on s'intéresse à un seul gaz et que c'est le seul gaz oxydable susceptible d'apparaître dans le milieu gazeux à caractériser : il fait apparaître deux paliers de températures croissantes, de durée très faible (0,2s environ) suivis d'un palier d'arrêt à l'ambiante plus long (ici de 5s mais il peut être choisi plus court en fonction des besoins ; il peut suffire d'un arrêt de 2,5 s seulement si l'on souhaite une mesure quasi-continue).

Dans le cas où l'on s'intéresse au méthane on choisit 800°C et 1000°C comme température de seuil inférieur et supérieur pour l'intervalle de température considéré.

Pour une détermination de méthane (méthanomètre) avec lever de doute on suit l'organigramme suivant :

M1 -    chauffage pendant 0,2s du filament à 800°C, mesure et saisie de la valeur de signal S4,
M2 -    chauffage pendant 0,2s du filament à 1000°C, mesure et saisie de la valeur de signal S5,
M3 -    arrêt du chauffage,
M4 -    calcul (si l'on choisit la méthode de calcul simplifiée) de d5 = (S5 - S4 - Ct 5) et comparaison à une valeur $\underline{a}$

légèrement négative,

M5 - si d5 > a, on calcule le titre par une expression du type A.B.d5 où A est un coefficient de sensibilité qui prend en compte la sensibilité du filament et où B est un coefficient qui permet de faire correspondre la mesure à l'unité choisie pour l'application : % vol, ou % LIE. Les coefficients A et B sont calculés et mis en mémoire par l'instrument après calibration dans un mélange de référence.

M5'- si d5 < a, on affiche un signal de forte concentration en méthane,

M6 - on attend (par exemple 5s) et on retourne à l'étape M1.

Lorsque l'on veut utiliser le transducteur catalytique en explosimètre, on peut suivre l'organigramme suivant (voir la figure 5) :

E1 - chauffage pendant 0,2s du filament à T1 = 100°C, mesure et saisie de la valeur de signal S1,

E2 - chauffage pendant 0,2s à T2 = 200°C, mesure et saisie de S2,

E3 - chauffage pendant 0,2s à T3 = 500°C, mesure et saisie de S3,

E4 - chauffage pendant 0,2s à T4 = 800°C, mesure et saisie de S4,

E5 - chauffage pendant 0,2s à T5 = 1000°C, mesure et saisie de S5,

E6 - arrêt du chauffage,

E7 - calcul des termes suivants (c'est la seconde méthode de calcul qui est utilisée ici à titre d'exemple) :

- $d'4 = S5 - K4.S4$
- $d'3 = S4 - K3.S3$
- $d'2 = S3 - K2.S2$
- $d'1 = S2 - K1.S1$

où les K4 à K1 sont des constantes (voir ci-dessus) spécifiques à chaque intervalle de température.

E8 - on sélectionne la plus grande d'n des valeurs d' calculées en E7,

E9 - on calcule le titre par la loi d'n. An.Bn où les coefficients An et Bn sont les valeurs des coefficients Ai et Bi (de même sens qu'indiqué ci-dessus à propos de l'étape M5, déterminés pour les i intervalles de température considérés) pour l'indice i de la plus grande des valeurs d'i : et on affiche ce titre.

E10 - on attend (5s) puis on retourne à l'étape E1.

Lorsque l'on cherche à utiliser le filament en méthanomètre sélectif avec lever de doute (c'est-à-dire capable d'identifier le méthane et de mesurer la teneur en méthane) on suit l'organigramme suivant :

MS1 à MS7   identique à E1 à E7

MS8 - on compare d'4 à une valeur de seuil a (légèrement négative),

MS9 - si d'4 < a, on affiche un signal d'excès de méthane,

MS9'- si d'4 > a et si d'4 est la plus grande des valeurs d'i, on fait le calcul et l'affichage indiqués ci-dessus à l'étape E9 avec l'indice n pris égal à 4,

MS9" - si d'4 > a et si d'4 n'est pas la plus grande valeur, on peut soit ne rien afficher, soit calculer et afficher le titre global tel que défini aux étapes E8 et E9,

MS10 - cf E10.

A titre d'exemple, dans le cas du filament défini ci-dessus, on choisit :

- entre T1 et T2 : $K1 = 0,75$
- entre T2 et T3 : $K2 = 0,75$
- entre T3 et T4 : $K3 = 0,88$
- entre T4 et T5 : $K4 = 1$

L'invention n'est bien sûr pas limitée à un transducteur du type filament (c'est-à-dire comprenant lui-même un élément résistif qui, par effet JOULE, chauffe sa surface catalytique à la température voulue) : le transducteur peut être chauffé indirectement par un élément résistif (ou tout autre élément chauffant) qui le chauffe ou qui est à proximité de lui.

**Revendications**

1. Procédé pour l'identification d'un gaz parmi plusieurs gaz connus, dans un milieu gazeux à base d'air selon lequel,

   - on place un transducteur unique catalytique (11) dans ce milieu gazeux,
   - on amène en un premier temps ce transducteur catalytique à une température de seuil inférieur pour laquelle ce gaz oxydable ne s'oxyde peu ou pas, et on saisit une première valeur d'une grandeur caractéristique du régime thermique du transducteur,
   - on amène en un deuxième temps ce transducteur catalytique à une température de seuil supérieur pour laquelle ce gaz oxydable s'oxyde de façon significative au contact de ce transducteur catalytique, et on saisit une seconde valeur de ladite grandeur caractéristique du régime thermique du transducteur,
   - on élabore selon une loi prédéterminée un signal de réponse représentatif du milieu gazeux à partir de la différence entre les seconde et première valeurs de la grandeur caractéristique du régime thermique du transducteur catalytique,
   - on laisse refroidir le transducteur catalytique en dessous de la température de seuil inférieur et on répète cycliquement les opérations précédentes.

2. Procédé selon la revendication 1, caractérisé en ce que le transducteur catalytique comporte un élément résistif et on amène ce transducteur catalytique aux températures de seuil inférieur puis de seuil supérieur par application d'un courant électrique à cet élément résistif.

3. Procédé selon la revendication 1 ou 2, caractérisé en ce qu'on choisit la température de seuil inférieur proche de la température à partir de laquelle ledit gaz oxydable commence à s'oxyder.

4. Procédé selon l'une quelconque des revendications 1 à 3, caractérisé en ce que, le tranducteur catalytique étant un filament de platine, on choisit les températures de seuils supérieur et inférieur telles que leur différence soit au moins égale à 50°C environ et au plus égale à 300°C environ, de préférence au plus égale à 200°C environ.

5. Procédé selon l'une quelconque des revendications 1 à 4, caractérisé en ce que le gaz oxydable prédéterminé étant le méthane, le signal de réponse est soit un signal dépendant de la différence entre les seconde et première valeurs de la grandeur caractéristique si leur différence est positive, soit un signal de saturation prédéterminé si cette différence est négative.

6. Procédé selon la revendication 4 ou la revendication 5, caractérisé en ce que les températures de seuil sont 800°C et 1000°C environ lorsque le transducteur catalytique est un filament de platine et lorsque le gaz oxydable considéré est soit du méthane, soit de l'éthylène.

7. Procédé selon l'une quelconque des revendications 4 à 6, caractérisé en ce que les températures de seuil sont 300°C et 600°C environ lorsque le transducteur catalytique est un filament de platine et lorsque le gaz oxydable considéré est soit du propane, soit du butane, soit de l'alcool éthylique.

8. Procédé selon l'une quelconque des revendications 4 à 7, caractérisé en ce que les températures de seuil sont 100°C et 200°C environ lorsque le transducteur catalytique est un filament de platine et lorsque le gaz oxydable considéré est de l'hydrogène .

9. Procédé selon l'une quelconque des revendications 1 à 8, caractérisé en ce que pour la caractérisation dudit milieu gazeux à base d'air en au moins un second gaz oxydable ayant une température de début d'oxydation sensiblement différente de celle du premier gaz, on choisit pour ce deuxième gaz oxydable une température de seuil inférieur pour laquelle ce deuxième gaz oxydable s'oxyde peu ou pas et une température de seuil supérieur à laquelle ce deuxième gaz s'oxyde de façon significative, ces températures de seuil définissant un intervalle de température sensiblement disjoint de, mais éventuellement adjacent à, l'intervalle des températures de seuil choisies pour le premier gaz, et on amène successivement le transducteur catalytique à ces diverses valeurs de seuil, classées par ordre croissant, on saisit la valeur instantanée de ladite grandeur caractéristique du régime thermique du transducteur pour chacune de ces températures de seuil, et on élabore selon une procédure prédéterminée un signal de réponse global à partir des différences constatées entre les valeurs saisies pour les températures de seuil de chacun des gaz.

10. Procédé selon la revendication 9, caractérisé en ce que lesdits intervalles de température sont adjacents.

11. Procédé selon la revendication 9 ou 10, caractérisé en ce que, pour la caractérisation du milieu gazeux en hydrogène, et/ou en un gaz choisi parmi l'alcool éthylique, le butane et le propane, et/ou en un gaz choisi parmi le méthane et l'éthylène, on amène successivement le transducteur catalytique à environ 100°C, 200°C, 300°C, 600°C, 800°C et 1000°C, et on élabore le signal de réponse global à partir de la plus grande différence, à une constante caractéristique près, des valeurs saisies pour chacun des intervalles entre lesdites températures précitées.

12. Procédé selon la revendication 9 ou 10 ou 11, caractérisé en ce que, pour la caractérisation sélective du méthane parmi d'autres gaz oxydables dans ledit milieu gazeux, on amène successivement le transducteur catalytique à environ 100°C, 200°C, 300°C, 600°C, 800°C et 1000°C, et on élabore le signal de réponse global à partir de la différence à une constante caractéristique près des valeurs obtenues pour 1000°C et 800°C respectivement si celle-ci est significativement négative, ou est supérieure aux différences obtenues, à des constantes caractéristiques près, pour les autres intervalles de température.

**Patentansprüche**

1. Verfahren zur Identifikation eines Gases unter mehreren bekannten Gasen in einem gasförmigen Milieu auf der Basis von Luft, wobei man

   - einen einzigen katalytischen Wandler (11) in diesem gasförmigen Milieu plaziert,
   - diesen katalytischen Wandler über einen ersten Zeitraum auf eine untere Schwellentemperatur bringt, bei der dieses oxidierbare Gas kaum oder nicht oxidiert, und einen ersten Wert einer für den Temperaturbereich des Wandlers charakteristischen Größe erfaßt,
   - diesen katalytischen Wandler über einen zweiten Zeitraum auf eine obere Schwellentemperatur bringt, bei der dieses oxidierbare Gas bei Kontakt mit dem katalytischen Wandler deutlich oxidiert, und einen zweiten Wert der für den Temperaturbereich des Wandlers charakteristischen Größe erfaßt,
   - gemäß einem vorgegebenen Gesetz und ausgehend von der Differenz zwischen dem zweiten und dem ersten Wert der für den Temperaturbereich des katalytischen Wandlers charakteristischen Größe ein für das gasförmige Milieu repräsentatives Antwortsignal erzeugt,
   - den katalytischen Wandler auf eine Temperatur unterhalb der unteren Schwellentemperatur abkühlen läßt und die vorherigen Operationen zyklisch wiederholt.

2. Verfahren nach Anspruch 1, dadurch gekennzeichnet, daß der katalytische Wandler ein Widerstandselement umfaßt und daß man diesen katalytischen Wandler durch Anlegen eines elektrischen Stroms an das Widerstandselement zunächst auf die untere, dann auf die obere Schwellentemperatur bringt.

3. Verfahren nach Anspruch 1 oder 2, dadurch gekennzeichnet, daß man die untere Schwellentemperatur nahe der Temperatur wählt, bei der das oxidierbare Gas zu oxidieren beginnt.

4. Verfahren nach einem der Ansprüche 1 bis 3, dadurch gekennzeichnet, daß man, wenn der katalytische Wandler ein Platindraht ist, die untere und obere Schwellentemperatur so wählt, daß ihre Differenz wenigstens etwa 50°C und höchstens etwa 300°C, vorzugsweise höchstens etwa 200°C, beträgt.

5. Verfahren nach einem der Ansprüche 1 bis 4, dadurch gekennzeichnet, daß das vorgegebene oxidierbare Gas Methan ist und das Antwortsignal entweder ein von der Differenz zwischen dem zweiten und dem ersten Wert der charakteristischen Größe abhängiges Signal ist, wenn deren Differenz positiv ist, oder ein vorgegebenes Sättigungssignal ist, wenn die Differenz negativ ist.

6. Verfahren nach Anspruch 4 oder Anspruch 5, dadurch gekennzeichnet, daß die Schwellentemperaturen etwa 800°C und 1000°C betragen, wenn der katalytische Wandler ein Platindraht ist und wenn es sich bei dem betrachteten oxidierbaren Gas entweder um Methan oder um Ethylen handelt.

7. Verfahren nach einem der Ansprüche 4 bis 6, dadurch gekennzeichnet, daß die Schwellentemperaturen etwa 300°C und 600°C betragen, wenn der katalytische Wandler ein Platindraht ist und wenn es sich bei dem betrachteten oxidierbaren Gas entweder um Propan, Butan oder um Ethylalkohol handelt.

8. Verfahren nach einem der Ansprüche 4 bis 7, dadurch gekennzeichnet, daß die Schwellentemperaturen etwa 100°C und 200°C betragen, wenn der katalytische Wandler ein Platindraht ist und wenn es sich bei dem betrachteten oxidierbaren Gas um Wasserstoff handelt.

9. Verfahren nach einem der Ansprüche 1 bis 8, dadurch gekennzeichnet, daß man zur Charakterisierung des erwähnten gasförmigen Milieus auf der Basis von Luft in wenigstens einem zweiten oxidierbaren Gas mit einer Oxidations-Anfangstemperatur, die sich im wesentlichen von derjenigen des ersten Gases unterscheidet, für dieses zweite oxidierbare Gas eine untere Schwellentemperatur, bei der dieses zweite oxidierbare Gas kaum oder nicht oxidiert, und eine obere Schwellentemperatur wählt, bei der das zweite Gas deutlich oxidiert, wobei diese Schwellentemperaturen ein Temperaturintervall festlegen, das im wesentlichen unabhängig, aber gegebenenfalls angrenzend an das Intervall der für das erste Gas gewählten Schwellentemperaturen ist, und daß man den katalytischen Wandler nacheinander auf diese verschiedenen Schwellenwerte bringt, die nach ansteigender Größe angeordnet sind, daß man ferner den augenblicklichen Wert der chakteristischen Größe des Temperaturbereichs des Wandlers für jede dieser Schwellentemperaturen erfaßt und, ausgehend von den Differenzen, die zwischen den für die Schwellentemperaturen jedes Gases erfaßten Werten festgestellt wurden, nach einem vorgegebenen Verfahren ein allgemeines Antwortsignal erzeugt.

10. Verfahren nach Anspruch 9, dadurch gekennzeichnet, daß die erwähnten Temperaturintervalle aneinander angrenzen.

11. Verfahren nach Anspruch 9 oder 10, dadurch gekennzeichnet, daß man zur Charakterisierung des gasförmigen Milieus in Wasserstoff und/oder in einem aus Ethylalkohol, Butan und Propan ausgewählten Gas und/oder in einem aus Methan und Ethylen ausgewählten Gas den katalytischen Wandler nacheinander auf etwa 100°C, 200°C, 300°C, 600°C, 800°C und 1000°C bringt und, ausgehend von der größten Differenz zu einer charakteristischen Konstante, die sich den für jedes der Intervalle zwischen den oben erwähnten Temperaturen erfaßten Werten nähert, ein allgemeines Antwortsignal erzeugt.

12. Verfahren nach Anspruch 9 oder 10 oder 11, dadurch gekennzeichnet, daß man zur selektiven Charakterisierung von Methan unter anderen oxidierbaren Gasen in dem erwähnten gasförmigen Milieu den katalytischen Wandler nacheinander auf etwa 100°C, 200°C, 300°C, 600°C, 800°C und 1000°C bringt und das allgemeine Antwortsignal, ausgehend von der Differenz zu einer charakteristischen Konstante, erzeugt, die sich nahe den für 1000°C bzw. 800°C erhaltenen Werten befindet, wenn diese deutlich negativ oder größer als die erhaltenen Differenzen zu den nahen charakteristischen Konstanten der anderen Temperaturintervalle sind.

## Claims

1. Method of identifying one of a plurality of known gases in a gaseous medium based on air, wherein:

   - a single catalytic transducer (11) is placed in said gaseous medium,
   - said catalytic transducer is heated to a lower threshold temperature at which said oxidisable gas is oxidised little or not at all, and a first value of a parameter characteristic of the thermal state of the transducer is captured,
   - then said catalytic transducer is heated to an upper threshold temperature at which said oxidisable gas oxidises significantly in contact with said catalytic transducer and a second value of said parameter characteristic of the thermal state of the transducer is captured,
   - using a predetermined law, a response signal representative of the gaseous medium is produced from the difference between the second and first values of the parameter characteristic of the thermal state of the catalytic transducer,
   - the catalytic transducer is allowed to cool below the lower threshold temperature and the above operations are repeated cyclically.

2. Method according to claim 1 characterised in that the catalytic transducer includes a resistive element and is heated to the lower threshold temperature and then to the upper threshold temperature by application of an electric current to said resistive element.

3. Method according to claim 1 or claim 2 characterised in that the lower threshold temperature is close to the temperature above which said oxidisable gas begins to oxidise.

4. Method according to any one of claims 1 to 3 characterised in that the catalytic transducer is a platinum filament and the upper and lower threshold temperatures are such that the difference between them is at least equal to approximately 50°C and at most equal to approximately 300°C and is preferably at most equal to approximately 200°C.

5. Method according to any one of claims 1 to 4 characterised in that the predetermined oxidisable gas is methane, the response signal is either a signal dependent on the difference between the second and first values of the characteristic parameter if their difference is positive or a predetermined saturation signal if said difference is negative.

6. Method according to claim 4 or claim 5 characterised in that the threshold temperatures are approximately 800°C and approximately 1 000°C if the catalytic transducer is a platinum filament and if the oxidisable gas is either methane or ethylene.

7. Method according to any one of claims 4 to 6 characterised in that the threshold temperatures are approximately 300°C and approximately 600°C if the catalytic transducer is a platinum filament and if the oxidisable gas is propane, butane or ethyl alcohol.

8. Method according to any one of claims 4 to 7 characterised in that the threshold temperatures are approximately 100°C and approximately 200°C if the catalytic transducer is a platinum filament and if the oxidisable gas is hydrogen.

9. Method according to any one of claims 1 to 8 characterised in that for characterisation of said air-based gaseous medium for at least a second oxidisable gas having an oxidation onset temperature substantially different from that of the first gas, a lower threshold temperature is chosen for said second oxidisable gas at which said second oxidisable gas oxidises little or not at all and an upper threshold temperature is chosen for said second oxidisable gas at which said second oxidisable gas oxidises significantly, said threshold temperatures defining a temperature range substantially non-contiguous with, but optionally adjacent to, the threshold temperature range chosen for the first gas, the catalytic transducer is heated to said threshold values in succession, in increasing order, the instantaneous value of said parameter characteristic of the thermal state of the transducer is captured for each of said threshold temperatures, and a predetermined procedure is used to produce a global response signal from the differences between the values captured for the threshold temperatures of each gas.

10. Method according to claim 9 characterised in that said temperature ranges are adjacent.

11. Method according to claim 9 or claim 10 characterised in that, for characterising the gaseous medium for hydrogen and/or a gas chosen from ethyl alcohol, butane and propane, and/or a gas chosen from methane and ethylene, the catalytic transducer is heated successively to approximately 100°C, approximately 200°C, approximately 300°C, approximately 600°C, approximately 800°C and approximately 1 000°C and the global response signal is derived from the greatest difference, allowing for a characteristic constant, between values captured for each of the ranges between said aforementioned temperatures.

12. Method according to claim 9 or claim 10 or claim 11 characterised in that, for selective characterisation of methane in other oxidisable gases in said gaseous medium the catalytic transducer is heated successively to approximately 100°C, approximately 200°C, approximately 300°C, approximately 600°C, approximately 800°C and approximately 1 000°C and the global response signal is produced from the difference, allowing for a characteristic constant, between the values obtained for 1 000°C and 800°C, respectively, if said difference is significantly negative, or is greater than the differences obtained, allowing for characteristic constants, for the other temperature ranges.

Fig.1

Fig.2

Fig. 3

Fig. 4

Fig. 5